# EUROPÄISCHE PATENTSCHRIFT

(11) **EP 2 954 233 B1**
(45) Veröffentlichungstag und Bekanntmachung des Hinweises auf die Patenterteilung: **24.10.2018**
(21) Anmeldenummer: 13824109.6
(22) Anmeldetag: 10.12.2013
(51) Int. Cl.: F16H 57/08, F16C 19/30, F16H 57/04

(54) **PLANETENRADLAGERUNG IN EINEM PLANETENGETRIEBE**
PLANET GEAR BEARING IN A PLANETARY GEARSET
PALIER DE SATELLITE DANS UN TRAIN PLANÉTAIRE

(30) Priorität: 08.02.2013 DE 102013202070; 29.04.2013 DE 102013207780
(43) Veröffentlichungstag der Anmeldung: 16.12.2015
(73) Patentinhaber: Schaeffler Technologies AG & Co. KG, 91074 Herzogenaurach (DE)
(72) Erfinder: FUGEL, Wolfgang, 90453 Nürnberg (DE); GEGNER, Martin, 91474 Langenfeld (DE)
(86) Internationale Anmeldenummer: PCT/DE2013/200341
(87) Internationale Veröffentlichungsnummer: WO 2014/121769

(56) Entgegenhaltungen:
- CN-U- 201 461 870
- DE-A1-102010 033 122
- DE-A1-102010 048 479
- JP-A- 2005 249 053
- US-A1- 2012 322 606

## Beschreibung

### Gebiet der Erfindung

Die Erfindung betrifft eine Planetenradlagerung in einem Planetengetriebe nach den oberbegriffsbildenden Merkmalen des Patentanspruchs 1, und sie ist insbesondere vorteilhaft an den in einem PKW-Automatikgetriebe angeordneten Planetengetrieben realisierbar. So eine Planetenlagerung ist aus der CN201461870U bekannt.

### Hintergrund der Erfindung

Die häufigste Ausführungsform von PKW-Automatikgetrieben sind sogenannte Wandlergetriebe, die sich von herkömmlichen und von automatisierten Schaltgetrieben vor allem durch einen zugkraftunterbrechungsfreien Schaltvorgang unterscheiden. Derartige PKW-Automatikgetriebe weisen zumeist einen hydraulischen Drehmomentenwandler als Anfahrkupplung auf und setzen sich im Wesentlichen aus mehreren Lamellenkupplungen sowie einer Kombination von mehreren Freiläufen und Planetengetrieben zusammen. Alle Schalt- und Kupplungsvorgänge erfolgen dabei über die Lamellenkupplungen, welche die kraftschlüssige Verbindung der einzelnen nacheinander geschalteten Planetengetriebe mit der Ein- und Ausgangswelle des Automatikgetriebes herstellen. Die einzelnen Planetengetriebe setzen sich dabei in bekannter Weise aus den koaxial angeordneten Bauteilen, Sonnenritzel, Planetenträger und Hohlrad sowie aus den auf konstanten Achsabstand im Planetenträger drehbar angeordneten Planetenrädern zusammen. Der Eintrieb erfolgt über das Sonnenritzel während über die Planetenräder die Drehbewegung auf den Planetenträger (Abtriebswelle) übertragen wird und durch das Abwälzen der Planetenräder im Hohlrad eine entsprechende Übersetzung erfolgt.

Die Lagerung der Planetenräder in solchen Planetengetrieben ist beispielsweise aus der DE 44 18 693 C1, der DE 198 04 734 A1 oder der DE 103 34 880 A1 bekannt und besteht im Wesentlichen aus zwei den Planetenradträger bildenden, parallel zueinander angeordneten Seitenwänden, die in mehreren jeweils achsgleich gegenüberliegenden Axialbohrungen eine Mehrzahl von Planetenradbolzen aufnehmen. Auf diesen Planetenradbolzen sind die Planetenräder über in zentrale Planetenradbohrungen eingesetzte Radialwälzlager drehbar ge-lagert, die zumeist als Nadelkränze oder als vollrollige Nadelsätze ausgebildet sind und über axiale und radiale Schmiermittelzuleitungen innerhalb der Planetenradbolzen permanent geschmiert werden. Darüber hinaus sind zwischen den Seitenwänden des Planetenradträgers und den Axialseiten jedes Planetenrades zwei kreisringförmige Anlaufscheiben angeordnet, welche als Verschleißschutz des zumeist ungehärteten Planetenradträgers und der Planetenräder so-wie als Axialanlauf für die Radialwälzlager der Planetenräder ausgebildet sind. Damit diese Anlaufscheiben keinen Schmiermittelstau in den Radialwälzlagern der Planetenräder verursachen, durch den es infolge des Durchwalkens der gestauten Schmiermittelmenge zu einer unerwünschten Temperaturerhöhung des Schmiermittels und der Radialwälzlager kommt, ist es durch die genannten Druckschriften bekannt, das Schmiermittel entweder über am Innendurchmesser des Anlaufscheiben angeformte Ausnehmungen oder durch sehnenartige Nuten in den Planetenradbolzen durch die Anlaufscheiben hindurch abzuführen.

Nachteilig bei einer derartigen Planetenradlagerung ist es jedoch, dass durch die verwendeten Anlaufscheiben zwischen den Planetenrädern und dem Planetenträger hohe Leistungsverluste durch die zwischen diesen und den Planetenrädern auftretende Gleitreibung entstehen, so dass mit solchen Planetengetrieben nicht die bei modernen PKW-Automatikgetrieben geforderte hohe E-nergieeffizienz erfüllt werden kann. Ebenso haben sich die bekannten Maßnahmen an den Anlaufscheiben zu Verbesserung des Schmiermitteldurchflusses durch die Radialwälzlager als unzureichend erwiesen, da der durch die Ausnehmungen in den Anlaufscheiben durch diese hindurch geleitete Schmiermittelstrom durch die rückseitig der Anlaufscheiben angeordneten Seitenwände des Planetenträgers gestoppt wird und es somit nach wie vor zu dem unerwünschten Schmiermittelstau in den Radialwälzlagern der Planetenräder kommt. Darüber hinaus hat sich die bekannte Planetenradlagerung auch im Hinblick auf die aufwändige Fertigung und Montage der Planetenräder als nachteilig erwiesen, da für die Axialseiten der Planetenräder zur Verminderung der Gleitreibung mit den Anlaufscheiben eine gesonderte Oberflächenbehandlung durch Schleifen und Honen notwendig ist. Die Montage der Planetenräder im Planetenträger erfolgt dann in umständlicher Weise derart, dass zunächst der Planetenradbolzen durch die Axialbohrung der einen Seitenwand des Planetenträgers durchgeschoben werden muss, anschließend die erste Anlaufscheibe auf den Planetenradbolzen aufgeschoben wird, danach das Planetenrad mit dem vormontierten Radialwälzlager zwischen die Seitenwände des Planetenradträgers eingesetzt und der Planetenradbolzen durch das Planetenrad durchgeschoben werden muss, um letztlich die zweite Anlaufscheibe noch zwischen das Planetenrad und die andere Seitenwand des Planetenradträgers einzusetzen und den Planetenradbolzen bis in die Axialbohrung der anderen Seitenwand einzuschieben.

### Aufgabe der Erfindung

Ausgehend von den dargelegten Nachteilen des bekannten Standes der Technik liegt der Erfindung deshalb die Aufgabe zu Grunde, eine Planetenradlagerung in einem Planetengetriebe zu konzipieren, mit welcher die durch Gleitreibung an den Planetenrädern entstehenden Leistungsverluste vermeidbar sowie eine ausreichender Schmiermitteldurchflusses durch die Radialwälzlager realisierbar ist und welche zugleich eine kostengünstigere Herstellung der Planetenräder sowie erleichterte Montage der Planetenräder im Planetenträger ermöglicht.

### Beschreibung der Erfindung

Erfindungsgemäß wird diese Aufgabe bei einer Planetenradlagerung nach dem Oberbegriff des Anspruchs 1 derart gelöst, dass die Anlaufelemente zwischen den Seitenwänden des Planetenradträgers und den Axialseiten der Planetenräder als jeweils aus einer Axialwinkelscheibe sowie aus einem durch eine Vielzahl von Lagernadeln und einem Axialnadelkäfig gebildeten Axialnadelkranz bestehende Axialnadellager ausgebildet sind.
Bevorzugte Ausgestaltungen und vorteilhafte Weiterbildungen der erfindungsgemäß ausgebildeten Planetenradlagerung werden in den Unteransprüchen 1 bis 9 beschrieben.

Danach ist es gemäß Anspruch 2 bei der erfindungsgemäß ausgebildeten Planetenradlagerung vorgesehen, dass jedes Axialnadellager eine aus dem Durch-messer der Lagernadeln und der Materialstärke der Axialwinkelscheibe gebildete Axialbreite von minimal 0,8 mm aufweist und gegen jede bisher an gleicher Stelle eingesetzte Anlaufscheibe mit einer Axialbreite ab 0,8 mm ohne Änderungen der Umgebungskonstruktion austauschbar ist. Da die für die Planetenradlagerung in PKW-Automatikgetrieben bisher gebräuchlichsten Anlaufscheiben eine Mindestaxialbreite von 0,8 mm aufweisen, ist es somit möglich, nahezu alle Anlaufscheiben in den Planetengetrieben eines Automatikgetriebes gegen reibungsarme Axialnadellager auszutauschen. Dies wurde bislang überhaupt nicht in Erwägung gezogen, da sich bisher alle Versuche, Axialnadellager mit einer solch geringen Axialbreite herzustellen, bedingt durch die filigrane Ausführung des Axialnadelkranzes und der Axialwinkelscheibe als äußerst problematisch hinsichtlich der maschinellen Fertigungs- und Montageprozesse erwiesen haben.

Gemäß den Ansprüchen 3, 4 und 5 zeichnet sich die erfindungsgemäß ausgebildete Planetenradlagerung desweiteren noch dadurch aus, dass die Axialwinkelscheiben der Axialnadellager einen S-förmigen Profilquerschnitt aufweisen, der radial jeweils aus einem äußeren Horizontalschenkel, einem oberen Vertikalschenkel, einem mittleren Horizontalschenkel, einem unteren Vertikalschennkel sowie einem inneren Horizontalschenkel besteht. Die äußeren Horizontalschenkel, die oberen Vertikalschenkel, und die mittleren Horizontalschenkel der Axialwinkelscheiben sind dabei zur Aufnahme der Axialnadelkränze vorgesehen, wobei die Innenseiten der oberen Vertikalschenkel die Laufbahnen für die Lagernadeln bilden. Die Außenseiten der oberen Vertikalschenkel der Axialwinkelscheiben liegen dagegen an den Seitenwänden des Planetenradträgers an und die Innenseiten der unteren Vertikalschenkel der Axialwinkelscheiben sind als Axialanlauf für die Radialwälzlager der Planetenräder ausgebildet.
Nach Anspruch 6 ist es ein weiteres Merkmal der erfindungsgemäß ausgebildeten Planetenradlagerung, dass die Radialwälzlager für jedes Planetenrad bevorzugt als zwei jeweils aus einen Käfig und einer Vielzahl von Lagernadeln bestehende, nebeneinander angeordnete Radialnadelkränze ausgebildet sind, die mit ihren Käfigen mit den unteren Vertikalschenkeln der Axialwinkelscheiben in Anlaufkontakt stehen. Die Lagerung der Planetenräder auf zwei oder auch mehr Nadelkränzen hat sich dabei besonders bei relativ breiten Planetenrädern als vorteilhaft hinsichtlich des Schränkverhaltens der Lagernadeln erwiesen. Bei schmaler ausgeführten Planetenrädern ist es jedoch auch möglich, die Radialwälzlager als einzelne Nadelkränze oder als einreihige vollrollige Nadelsätze auszubilden.

Eine erste vorteilhafte Ausführungsform der erfindungsgemäß ausgebildeten Planetenradlagerung ist es nach Anspruch 7 darüber hinaus, dass der Außendurchmesser der mittleren Horizontalschenkel der Axialwinkelscheiben größer als der Durchmesser der Planetenradbohrungen ist. Als zweckmäßig hat es sich dabei erwiesen, den Außendurchmesser der mittleren Horizontalschenkel etwa um das Durchmessermaß der Lagernadeln der Radialnadelkränze größer als den Durchmesser der Planetenradbohrungen auszubilden. Diese Ausbildung hat den Hintergrund, dass dadurch die unteren Vertikalschenkel der Axialwinkelscheiben radial verlängert auszubilden sind, so dass sich in vorteilhafter Weise zwischen den unteren Vertikalschenkeln der Axialwinkelscheiben und den Axialseiten der Planetenräder zwei Spaltdichtungen bilden, mit denen der Schmiermittelabfluss aus den Radialwälzlagern der Planetenräder gedrosselt werden kann, wenn dies für eine bestimmte Planetenradlagerung in einem Planetengetriebe erforderlich ist.

Bei einer zweiten vorteilhaften Ausführungsform der erfindungsgemäß ausgebildeten Planetenradlagerung ist es nach Anspruch 8 dagegen vorgesehen, dass der Außendurchmesser der mittleren Horizontalschenkel der Axialwinkelscheiben kleiner als der Durchmesser der Planetenradbohrungen ist. Ähnlich wie bei der ersten Ausführungsform hat es sich hierbei ebenfalls als zweckmäßig erwiesen, den Außendurchmesser der mittleren Horizontalschenkel etwa um das Durchmessermaß der Lagernadeln der Radialnadelkränze kleiner als den Durchmesser der Planetenradbohrungen auszubilden. Eine solche Ausbildung hat wiederum den Hintergrund, dass dadurch die unteren Vertikalschenkel der Axialwinkelscheiben radial verkürzt auszubilden sind, so dass sich zwischen den mittleren Horizontalschenkeln der Axialwinkelscheiben und den Planetenradbohrungen zwei größere Ringspalte bilden, mit denen ein großer Volumenstrom an Schmiermittel aus den Radialwälzlagern der Planetenräder abgeführt werden kann, wenn dies für eine bestimmte Planetenradlagerung in einem Planetengetriebe erforderlich ist.

Schließlich wird es als dritte vorteilhafte Ausführungsform der erfindungsgemäß ausgebildeten Planetenradlagerung durch Anspruch 9 noch vorgeschlagen, dass der Außendurchmesser der mittleren Horizontalschenkel der Axialwinkelscheiben ebenfalls kleiner als der Durchmesser der Planetenradbohrungen ist und zugleich die mittleren Horizontalschenkel und inneren Horizontalschenkeln axial verlängert ausgebildet sind. Hierbei hat es sich als zweckmäßig erwiesen, den Außendurchmesser der mittleren Horizontalschenkel nur etwa um das halbe Durchmessermaß der Lagernadeln der Radialnadelkränze kleiner als den Durchmesser der Planetenradbohrungen sowie die mittleren und inneren Horizontalschenkel axial etwa doppelt so lang wie die äußeren Horizontalschenkel auszubilden. Durch eine solche Ausbildung ragen die mittleren und inneren Horizontalschenkel sowie die unteren Vertikalschenkeln der Axialwinkelscheiben in die Planetenradbohrungen derart hinein, dass die Planetenräder zusammen mit den Axialnadellagern und Radialwälzlagern eine Baueinheit bilden, die durch einfaches Einsetzen in den Planetenradträger und unterbrechungsfreies Durchschieben des Planetenradbolzens wesentlich leichter als bisher montierbar ist. Gleichzeitig werden mit einer solchen Ausbildung wieder zwischen den mittleren Horizontalschenkeln der Axialwinkelscheiben und den Planetenradbohrungen zwei Spaltdichtungen gebildet, mit denen ein gedrosselter Schmiermittelabfluss aus den Radialwälzlagern der Planetenräder möglich ist.

Zusammenfassend weist die erfindungsgemäß ausgebildete Planetenradlagerung somit gegenüber den aus dem Stand der Technik bekannten Planetenradlagerungen den Vorteil auf, dass anstelle der bisher zwischen den Seitenwänden des Planetenradträgers und den Axialseiten der Planetenräder eingesetzten Anlaufscheiben nunmehr Axialnadellager zum Einsatz kommen, welche die gleiche Axialbreite wie die Anlaufscheiben aufweisen und somit ohne Änderungen der Umgebungskonstruktion gegen diese austauschbar sind. Dadurch werden die Planetenräder nunmehr über Rollreibung axial gegen den Planetenradträger abgestützt, so dass die bisher durch Gleitreibung an den Planetenrädern entstehenden Leistungsverluste nahezu vollständig vermieden werden. Gleichzeitig ist bei allen Ausführungsformen der erfindungsgemäßen Planetenradlagerung ein ausreichender Schmiermitteldurchflusses durch die Radialwälzlager realisierbar, da durch eine gezielte Profilierung der Axialwinkelscheiben der Axialnadellager das Schmiermittel durch entsprechende Ringspalte zwischen den Planetenrädern und den Axialwinkelscheiben sowie über die Axialnadelkränze aus den Radialwälzlagern der Planetenräder abführbar ist. Darüber hinaus ist durch die erfindungsgemäße Planetenradlagerung auch eine kostengünstigere Herstellung der Planetenräder sowie erleichterte Montage der Planetenräder im Planetenträger möglich, da für die Axialseiten der Planetenräder nur noch eine entfeinerte Oberflächenbehandlung durch Schleifen notwendig ist und deren Montage durch einfaches Einsetzen in den Planetenradträger und unterbrechungsfreies Durchschieben des Planetenradbolzens erfolgen kann.

### Kurze Beschreibung der Zeichnungen

Die erfindungsgemäß ausgebildete Planetenradlagerung wird nachfolgend in drei bevorzugten Ausführungsformen unter Bezugnahme auf die beigefügten Zeichnungen näher erläutert. Dabei zeigen:
- Figur 1: eine räumliche Teilansicht eines Querschnittes durch ein Planetengetriebe mit einer ersten Ausführungsform der erfindungs-gemäß ausgebildeten Planetenradlagerung;
- Figur 2: eine vergrößerte Darstellung der Einzelheit X der erfindungsgemäß ausgebildeten Planetenradlagerung gemäß Figur 1;
- Figur 3: eine räumliche Teilansicht eines Querschnittes durch ein Planetengetriebe mit einer zweiten Ausführungsform der erfindungs-gemäß ausgebildeten Planetenradlagerung;
- Figur 4: eine vergrößerte Darstellung der Einzelheit Y der erfindungsgemäß ausgebildeten Planetenradlagerung gemäß Figur 3;
- Figur 5: eine räumliche Teilansicht eines Querschnittes durch ein Planetengetriebe mit einer dritten Ausführungsform der erfindungs-gemäß ausgebildeten Planetenradlagerung;
- Figur 6: eine vergrößerte Darstellung der Einzelheit Z der erfindungsgemäß ausgebildeten Planetenradlagerung gemäß Figur 5.

### Ausführliche Beschreibung der Zeichnungen

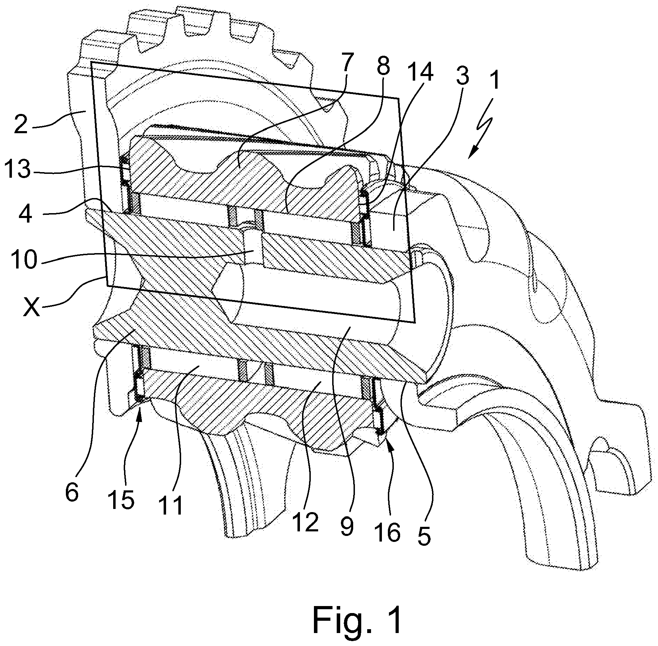

Die Figuren 1, 3 und 5 zeigen deutlich jeweils eine Planetenradlagerung in einem Planetengetriebe, welche im Wesentlichen aus einem Planetenradträger 1 mit zwei parallel zueinander angeordneten Seitenwänden 2, 3 besteht, die in mehreren jeweils achsgleich gegenüberliegenden Axialbohrungen 4, 5 eine Mehrzahl von Planetenradbolzen 6 aufnehmen. Auf den Planetenradbolzen 6 sind dabei mehrere Planetenräder 7 über in zentrale Planetenradbohrungen 8 eingesetzte Radialwälzlager 11, 12 drehbar gelagert, die über axiale und radiale Schmiermittelzuleitungen 9, 10 innerhalb der Planetenradbolzen 6 permanent geschmiert werden. Darüber hinaus sind zwischen den Seitenwänden 2, 3 des Planetenradträgers 1 und den Axialseiten 13, 14 der Planetenräder 7 ringscheibenförmige Anlaufelemente 15, 16 angeordnet, welche als Verschleißschutz des Planetenradträgers 1 sowie der Planetenräder 7 und als Axialanlauf für die Radialwälzlager 11, 12 der Planetenräder 7 ausgebildet sind.

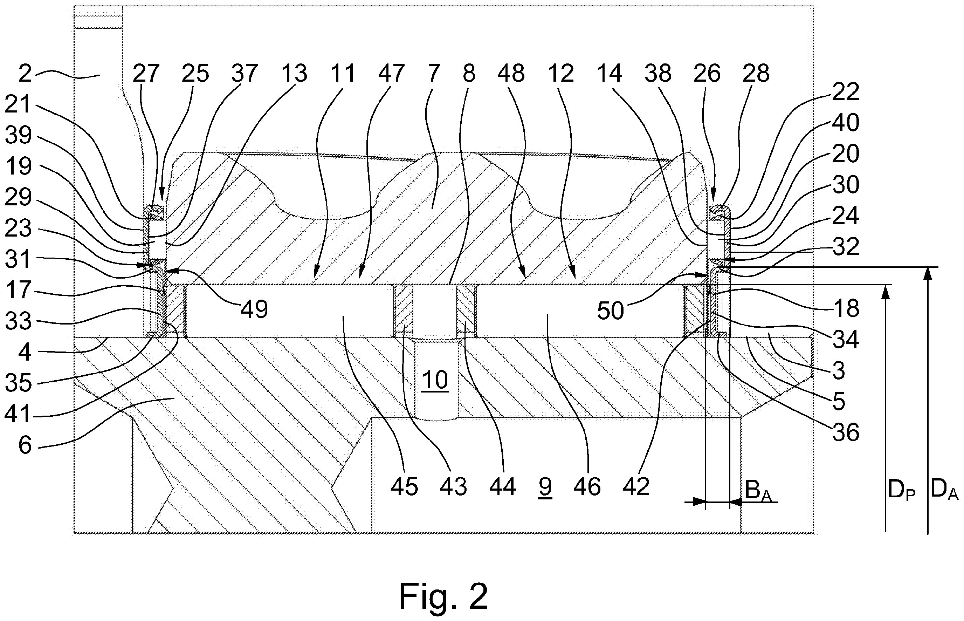

Aus den Figuren 2, 4 und 6 geht desweiteren hervor, dass die ringscheibenförmigen Anlaufelemente 15, 16 zwischen den Seitenwänden 2, 3 des Planetenradträgers 1 und den Axialseiten 13, 14 der Planetenräder 7 erfindungsgemäß als jeweils aus einer Axialwinkelscheibe 17, 18 sowie aus einem durch eine Vielzahl von Lagernadeln 19, 20 und einem Axialnadelkäfig 21, 22 gebildeten Axialnadelkranz 23, 24 bestehende Axialnadellager 25, 26 ausgebildet sind, die jeweils eine aus dem Durchmesser der Lagernadeln 19, 20 und der Materialstärke der Axialwinkelscheibe 17, 18 gebildete Axialbreite B_{A} von minimal 0,8 mm aufweisen und dadurch gegen jede bisher an gleicher Stelle eingesetzte Anlaufscheibe mit einer Axialbreite ab 0,8 mm ohne Änderungen der Umgebungskonstruktion austauschbar sind.

Desweiteren ist aus den Figuren 2, 4 und 6 ersichtlich, dass die Axialwinkelscheiben 17, 18 der Axialnadellager 25, 26 einen S-förmigen Profilquerschnitt aufweisen, der radial jeweils aus einem äußeren Horizontalschenkel 27, 28, einem oberen Vertikalschenkel 29, 30, einem mittleren Horizontalschenkel 31, 32, einem unteren Vertikalschenkel 33, 34 sowie einem inneren Horizontalschenkel 35, 36 besteht. Die äußeren Horizontalschenkel 27, 28, die oberen Vertikalschenkel 29, 30, und die mittleren Horizontalschenkel 31, 32 der Axialwinkelscheiben 17, 18 sind dabei zur Aufnahme der Axialnadelkränze 23, 24 vorgesehen, während die Innenseiten 37, 38 der oberen Vertikalschenkel 29, 30 gleichzeitig die Laufbahnen für die Lagernadeln 19, 20 bilden und die Außenseiten 39, 40 der oberen Vertikalschenkel 29, 30 an den Seitenwänden 2, 3 des Planetenradträgers 1 anliegen. Die Innenseiten 41, 42 der unteren Vertikal-schenkel 33, 34 der Axialwinkelscheiben 17, 18 sind dagegen als Axialanlauf für die Radialwälzlager 11, 12 der Planetenräder 7 ausgebildet, wobei die Radialwälzlager 11, 12 als zwei jeweils aus einen Käfig 43, 44 und einer Vielzahl von Lagernadeln 45, 46 bestehende, nebeneinander angeordnete Radialnadelkränze 47, 48 ausgebildet sind, die mit ihren Käfigen 43, 44 mit den unteren Vertikalschenkeln 33, 34 der Axialwinkelscheiben 17, 18 in Anlaufkontakt stehen.

Die Besonderheit der in den Figuren 1 und 2 dargestellten ersten Ausführungsform der erfindungsgemäßen Planetenradlagerung ist, dass der Außendurchmesser D_{A} der mittleren Horizontalschenkel 31, 32 der Axialwinkelscheiben 17, 18 etwa um das Durchmessermaß der Lagernadeln 45, 46 der Radialnadelkränze 47, 48 größer als der Durchmesser D_{P} der Planetenradbohrungen (8) ist, so dass die unteren Vertikalschenkel 33, 34 der Axialwinkelscheiben 17, 18 radial verlängert auszubilden sind und sich zwischen den unteren Vertikalschenkeln 33, 34 und den Axialseiten 13, 14 der Planetenräder 7 zwei Spaltdichtungen 49, 50 bilden, mit denen der Schmiermittelabfluss aus den Radialwälzlagern 11, 12 der Planetenräder 7 gedrosselt werden kann.

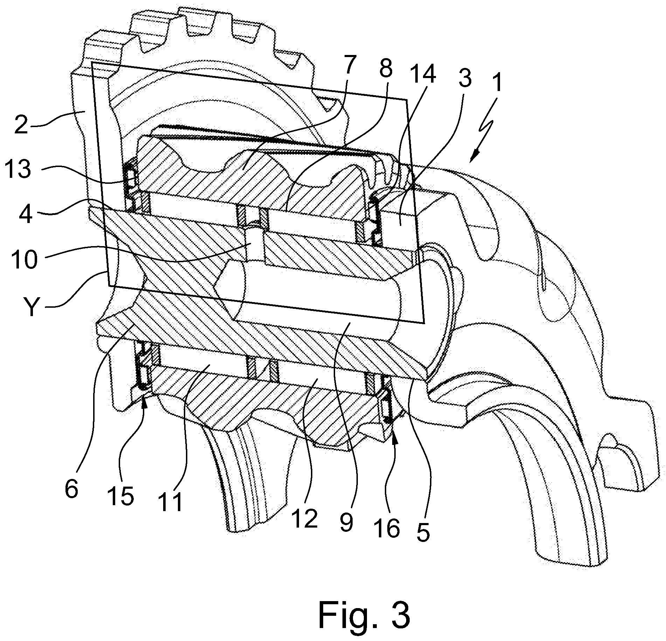

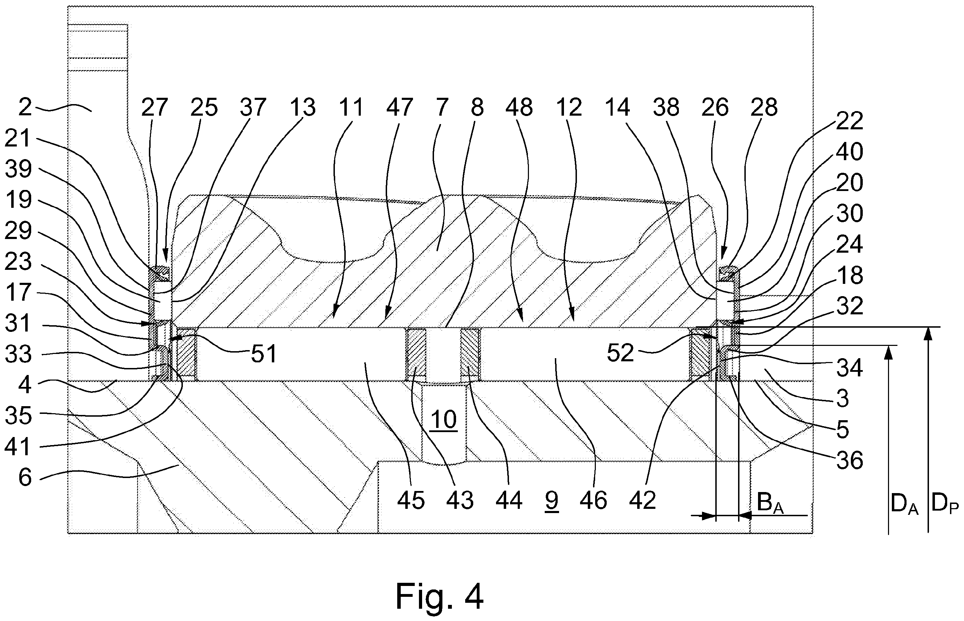

Die in den Figuren 3 und 4 gezeigte zweite Ausführungsform der erfindungsgemäßen Planetenradlagerung unterscheidet sich von der ersten Ausführungsform dagegen dadurch, dass der Außendurchmesser D_{A} der mittleren Horizontalschenkel 31, 32 der Axialwinkelscheiben 17, 18 hier etwa um das Durchmessermaß der Lagernadeln 45, 46 der Radialnadelkränze 47, 48 kleiner als der Durchmesser D_{P} der Planetenradbohrungen 8 ist. Dadurch sind die unteren Vertikalschenkel 33, 34 der Axialwinkelscheiben 17, 18 radial verkürzt auszubilden, so dass und sich zwischen den mittleren Horizontalschenkeln 31, 32 der Axialwinkelscheiben 17, 18 und den Planetenradbohrungen 8 zwei größere Ringspalte 51, 52 bilden, mit denen ein großer Volumenstrom an Schmiermittel aus den Radialwälzlagern 11, 12 der Planetenräder 7 abgeführt werden kann.

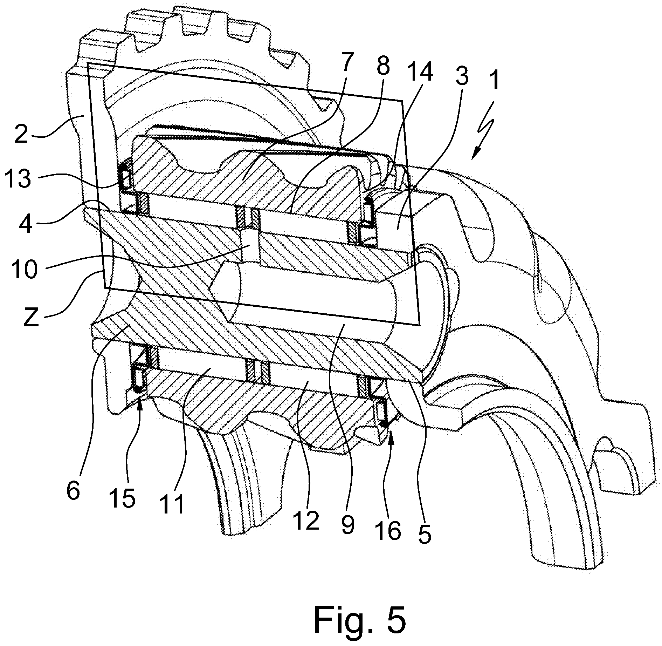

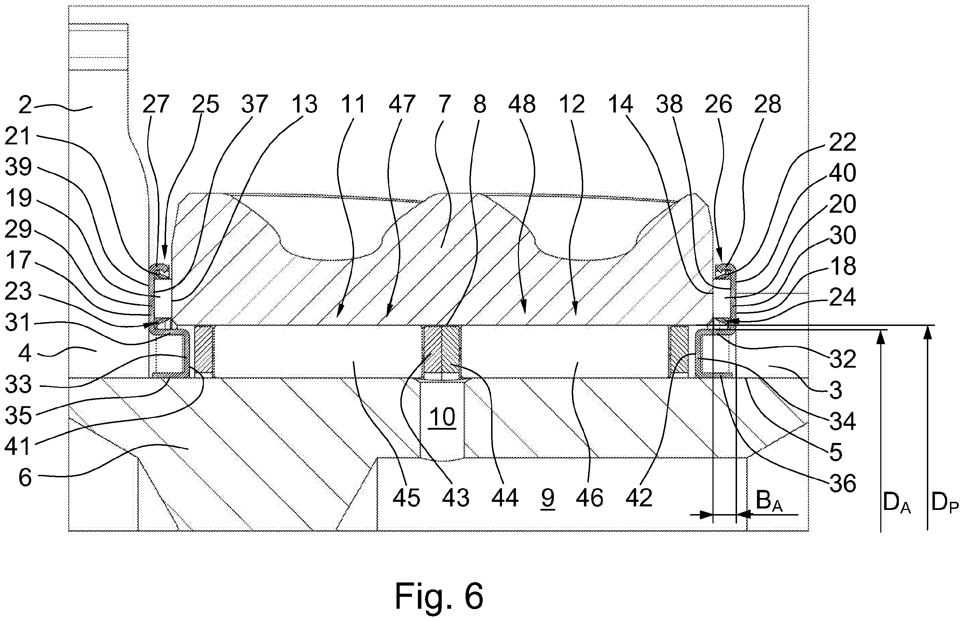

Die in den Figuren 5 und 6 dargestellte dritte Ausführungsform der erfindungsgemäßen Planetenradlagerung zeichnet sich schließlich noch dadurch aus, dass der Außendurchmesser D_{A} der mittleren Horizontalschenkel 31, 32 der Axialwinkelscheiben 17, 18 nur etwa um das halbe Durchmessermaß der Lagernadeln 45, 46 der Radialnadelkränze 47, 48 kleiner als der Durchmesser D_{P} der Planetenradbohrungen 8 ist und zugleich die mittleren Horizontalschenkel 31, 32 und inneren Horizontalschenkeln 35, 36 axial etwa doppelt so lang wie die äußeren Horizontalschenkel 27, 28 ausgebildet sind. Dadurch ragen die mittleren und inneren Horizontalschenkel 31, 32, 35, 36 sowie die unteren Vertikalschenkel 33, 34 in die Planetenradbohrungen 8 derart hinein, dass die Planetenräder 7 zusammen mit den Axialnadellagern 25, 26 und Radialwälzlagern 11, 12 eine Baueinheit bilden, die durch einfaches Einsetzen in den Planetenradträger 1 und unterbrechungsfreies Durchschieben des Planetenradbolzens 6 wesentlich leichter als bisher montierbar ist. Gleichzeitig werden mit einer solchen Ausbildung wieder zwischen den mittleren Horizontalschenkeln 31, 32 der Axialwinkelscheiben 17, 18 und den Planetenradbohrungen 8 zwei nicht näher bezeichnete Spaltdichtungen gebildet, mit denen ein gedrosselter Schmiermittelabfluss aus den Radialwälzlagern 11, 12 der Planetenräder 7 möglich ist.

**Bezugszahlenliste**

| | | | |
|---|---|---|---|
| 1 | Planetenradträger | 29 | oberer Vertikalschenkel von 17 |
| 2 | Seitenwand von 1 | 30 | oberer Vertikalschenkel von 18 |
| 3 | Seitenwand von 1 | 31 | mittlerer Horizontalschenkel von 17 |
| 4 | Axialbohrung in 2 | | |
| 5 | Axialbohrung in 3 | 32 | mittlerer Horizontalschenkel von 18 |
| 6 | Planetenradbolzen | | |
| 7 | Planetenrad | 33 | unterer Vertikalschenkel von 17 |
| 8 | Planetenradbohrung | 34 | unterer Vertikalschenkel von 18 |
| 9 | axiale Schmiermittelzuleitung in 6 | 35 | innerer Horizontalschenkel von 17 |
| 10 | radiale Schmiermittelzuleitung in 6 | 36 | innerer Horizontalschenkel von 17 |
| 11 | Radialwälzlager in 8 | 37 | Innenseite von 29 |
| 12 | Radialwälzlager in 8 | 38 | Innenseite von 30 |
| 13 | Axialseite von 7 | 39 | Außenseite von 29 |
| 14 | Axialseite von 7 | 40 | Außenseite von 30 |
| 15 | Anlaufelement | 41 | Innenseite von 33 |
| 16 | Anlaufelement | 42 | Innenseite von 34 |
| 17 | Axialwinkelscheibe von 25 | 43 | Käfig von 47 |
| 18 | Axialwinkelscheibe von 26 | 44 | Käfig von 48 |
| 19 | Lagernadeln von 23 | 45 | Lagernadeln von 47 |
| 20 | Lagernadeln von 24 | 46 | Lagernadeln von 48 |
| 21 | Axialnadelkäfig von 23 | 47 | Radialnadelkranz von 11 |
| 22 | Axialnadelkäfig von 24 | 48 | Radialnadelkranz von 12 |
| 23 | Axialnadelkranz von 25 | 49 | Spaltdichtung bei 25 |
| 24 | Axialnadelkranz von 26 | 50 | Spaltdichtung bei 26 |
| 25 | Axialnadellager | 51 | Ringspalt bei 25 |
| 26 | Axialnadellager | 52 | Ringspalt bei 26 |
| 27 | äußerer Horizontalschenkel von 17 | | |
| | | B_{A} | Axialbreite von 25 bzw. 26 |
| 28 | äußerer Horizontalschenkel von 18 | D_{A} | Außendurchmesser von 31 bzw. 32 |
| | | D_{P} | Durchmesser von 8 |

## Patentansprüche

1. Planetenradlagerung in einem Planetengetriebe, im Wesentlichen bestehend aus einem Planetenradträger (1) mit zwei parallel zueinander angeordneten Seitenwänden (2, 3), die in mehreren jeweils achsgleich gegenüberliegenden Axialbohrungen (4, 5) eine Mehrzahl von Planetenradbolzen (6) aufnehmen, auf denen mehrere Planetenräder (7) über in zentrale Planetenradbohrungen (8) eingesetzte sowie über axiale und radiale Schmiermittelzuleitungen (9, 10) innerhalb der Planetenradbolzen (6) permanent geschmierte Radialwälzlager (11, 12) drehbar gelagert sind, wobei zwischen den Seitenwänden (2, 3) des Planetenradträgers (1) und den Axialseiten (13, 14) der Planetenräder (7) jeweils Axialnadellager (25, 26) angeordnet sind, die einen durch eine Vielzahl von Lagernadeln (19, 20) und einem Axialnadelkäfig (21, 22) gebildeten Axialnadelkranz (23, 24) aufweisen und als Verschleißschutz des Planetenradträgers (1) und der Planetenräder (7) sowie als Axial-anlauf für die Radialwälzlager (11, 12) der Planetenräder (7) ausgebildet sind, **dadurch gekennzeichnet, dass** die Axialnadellager (25, 26) nur jeweils eine Axialwinkelscheibe (17, 18) mit einen S-förmigen Profilquerschnitt aufweisen, der radial jeweils aus einem äußeren Horizontalschenkel (27, 28), einem oberen Vertikalschenkel (29, 30), einem mittleren Horizontalschenkel (31, 32), einem unteren Vertikalschenkel (33, 34) und einem inneren Horizontalschenkel (35, 36) besteht, wobei jedes Axialnadellager (25, 26) eine aus dem Durchmesser der Lagernadeln (19, 20) und der Materialstärke der Axialwinkelscheibe (17, 18) gebildete Axialbreite (B_{A}) von größer oder gleich 0,8 mm aufweist und gegen jede bisher an gleicher Stelle eingesetzte Anlaufscheibe mit einer Axialbreite von größer oder gleich 0,8 mm ohne Änderungen der Umgebungskonstruktion austauschbar ist.

2. Planetenradlagerung nach Anspruch 1, **dadurch gekennzeichnet, dass** der Außendurchmesser (D_{A}) der mittleren Horizontalschenkel (31, 32) der Axialwinkelscheiben (17, 18) größer als der Durchmesser (Dp) der Planetenradbohrungen (8) ist, so dass sich zwischen den unteren Vertikalschenkeln (33, 34) der Axialwinkelscheiben (17, 18) und den Axialseiten (13, 14) der Planetenräder (7) zwei Spaltdichtungen (49, 50) für einen gedrosselten Schmiermittelabfluss aus den Radialwälzlagern (11, 12) der Planetenräder (7) bilden.

3. Planetenradlagerung nach Anspruch 1, **dadurch gekennzeichnet, dass** der Außendurchmesser (D_{A}) der mittleren Horizontalschenkel (31, 32) der Axialwinkelscheiben (17, 18) kleiner als der Durchmesser (D_{P}) der Planetenradbohrungen (8) ist, so dass sich zwischen den mittleren Horizontalschenkeln (31, 32) der Axialwinkelscheiben (17, 18) und den Planetenradbohrungen (8) zwei größere Ringspalte (51, 52) für einen großvolumigen Schmiermittelabfluss aus den Radialwälzlagern (11, 12) der Planetenräder (7) bilden.

4. Planetenradlagerung nach Anspruch 1, **dadurch gekennzeichnet, dass** der Außendurchmesser (D_{A}) der mittleren Horizontalschenkel (31, 32) der Axialwinkelscheiben (17, 18) kleiner als der Durchmesser (D_{P}) der Planetenradbohrungen (8) ist und zugleich die mittleren Horizontalschenkel (31, 32) und inneren Horizontalschenkeln (35, 36) axial verlängert ausgebildet sind, so dass diese und die unteren Vertikalschenkel (33, 34) in die Planetenradbohrungen (8) hinein ragen und die Planetenräder (7) zusammen mit Axialnadellagern (25, 26) und den Radialwälzlagern (11, 12) eine erleichtert im Planetenradträger (1) montierbare Baueinheit bilden.

5. Planetenradlagerung nach einem der Ansprüche 1 bis 4, **dadurch gekennzeichnet, dass** die äußeren Horizontalschenkel (27, 28), die oberen Vertikalschenkel (29, 30), und die mittleren Horizontalschenkel (31, 32) der Axialwinkelscheiben (17, 18) zur Aufnahme der Axialnadelkränze (23, 24) vorgesehen sind, wobei die Innenseiten (37, 38) der oberen Vertikalschenkel (29, 30) die Laufbahnen für die Lagernadeln (19, 20) bilden.

6. Planetenradlagerung nach einem der Ansprüche 1 bis 4, **dadurch gekennzeichnet, dass** die Außenseiten (39, 40) der oberen Vertikalschenkel (29, 30) der Axialwinkelscheiben (17, 18) an den Seitenwänden (2, 3) des Planetenradträgers (1) anliegen und die Innenseiten (41, 42) der unteren Vertikalschenkel (33, 34) der Axialwinkelscheiben (17, 18) als Axialanlauf für die Radialwälzlager (11, 12) der Planetenräder (7) ausgebildet sind.

7. Planetenradlagerung nach Anspruch 7, **dadurch gekennzeichnet, dass** die Radialwälzlager (11, 12) für jedes Planetenrad (7) bevorzugt als zwei jeweils aus einen Käfig (43, 44) und einer Vielzahl von Lagernadeln (45, 46) bestehende, nebeneinander angeordnete Radialnadelkränze (47, 48) ausgebildet sind, die mit ihren Käfigen (43, 44) mit den unteren Vertikalschenkeln (33, 34) der Axialwinkelscheiben (17, 18) in Anlaufkontakt stehen.

## Claims

1. Planetary gear mounting in a planetary gear set, substantially composed of a planetary gear support (1) having two side walls (2, 3) which are disposed so as to be mutually parallel and which in a plurality of axial bores (4, 5) that in each case are mutually opposite in an axially identical manner receive a plurality of planetary gear bolts (6) on which a plurality of planetary gears (7) are rotatably mounted by way of radial roller bearings (11, 12) that are inserted into central planetary gear bores (8) and are permanently lubricated by way of axial and radial lubricant supply lines (9, 10) within the planetary gear bolts (6), wherein axial needle roller bearings (25, 26) are disposed in each case between the side walls (2, 3) of the planetary gear support (1) and the axial sides (13, 14) of the planetary gears (7), said axial needle roller bearings (25, 26) having an axial needle roller and cage assembly (23, 24) that is formed by a multiplicity of bearing needle rollers (19, 20) and an axial needle roller cage (21, 22) and being configured as an anti-wear protection of the planetary gear support (1) and of the planetary gears (7) as well as an axial thrust element for the radial roller bearings (11, 12) of the planetary gears (7),
**characterized in that** the axial needle roller bearings (25, 26) have in each case only one angled axial disc (17, 18) having an S-shaped profile cross section which in radial terms is composed of in each case one external horizontal leg (27, 28), one upper vertical leg (29, 30), one central horizontal leg (31, 32), one lower vertical leg (33, 34), and one internal horizontal leg (35, 36), wherein each axial needle roller bearing (25, 26) has an axial width (B_{A}), formed from the diameter of the bearing needle rollers (19, 20) and from the material thickness of the axial angled disc (17, 18), of greater than or equal to 0.8 mm and is replaceable without any modification of the surrounding construction by any thrust washer yet used at the same location having an axial width of greater than or equal to 0.8 mm.

2. Planetary gear mounting according to Claim 1,
**characterized in that** the external diameter (D_{A}) of the central horizontal legs (31, 32) of the angled axial discs (17, 18) is larger than the diameter (D_{P}) of the planetary gear bores (8) such that two gap seals (49, 50) for a restricted outflow of lubricant from the radial roller bearings (11, 12) of the planetary gears (7) are formed between the lower vertical legs (33, 34) of the angled axial discs (17, 18) and the axial sides (13, 14) of the planetary gears (7).

3. Planetary gear mounting according to Claim 1,
**characterized in that** the external diameter (D_{A}) of the central horizontal legs (31, 32) of the angled axial discs (17, 18) is smaller than the diameter (Dp) of the planetary gear bores (8) such that two larger annular gaps (51, 52) for a high-volume outflow of lubricant from the radial roller bearings (11, 12) of the planetary gears (7) are formed between the central horizontal legs (31, 32) of the angled axial discs (17, 18) and the planetary gear bores (8).

4. Planetary gear mounting according to Claim 1,
**characterized in that** the external diameter (D_{A}) of the central horizontal legs (31, 32) of the angled axial discs (17, 18) is smaller than the diameter (Dp) of the planetary gear bores (8), and the central horizontal legs (31, 32) and the internal horizontal legs (35, 36) are simultaneously configured so as to be axially extended in length such that said central horizontal legs (31, 32) and said internal horizontal legs (35, 36) and the lower vertical legs (33, 34) protrude into the planetary gear bores (8) and the planetary gears (7) conjointly with the axial needle roller bearings (25, 26) and the radial roller bearings (11, 12) form a functional group that is capable of being assembled in a simplified manner in the planetary gear support (1).

5. Planetary gear mounting according to one of Claims 1 to 4,
**characterized in that** the external horizontal legs (27, 28), the upper vertical legs (29, 30), and the central horizontal legs (31, 32) of the angled axial discs (17, 18) are provided for receiving the axial needle roller and cage assemblies (23, 24), wherein the internal sides (37, 38) of the upper vertical legs (29, 30) form the raceways for the bearing needle rollers (19, 20).

6. Planetary gear mounting according to one of Claims 1 to 4,
**characterized in that** the external sides (39, 40) of the upper vertical legs (29, 30) of the angled axial discs (17, 18) bear on the side walls (2, 3) of the planetary gear support (1), and the internal sides (41, 42) of the lower vertical legs (33, 34) of the angled axial discs (17, 18) are configured as an axial thrust element for the radial roller bearings (11, 12) of the planetary gears (7).

7. Planetary gear mounting according to Claim 7,
**characterized in that** the radial roller bearings (11, 12) for each planetary gear (7) are preferably configured as two radial needle roller and cage assemblies (47, 48) that are disposed beside one another and are in each case composed of a cage (43, 44) and a multiplicity of bearing needle rollers (45, 46), said radial needle roller and cage assemblies (47, 48) by way of the cages (43, 44) thereof being in thrust contact with the lower vertical legs (33, 34) of the angled axial discs (17, 18).

## Revendications

1. Palier de satellite dans un engrenage planétaire, essentiellement constitué d'un porte-satellites (1) avec deux parois latérales (2, 3) disposées parallèlement l'une à l'autre, qui reçoivent, dans plusieurs alésages axiaux (4, 5) opposés l'un à l'autre à chaque fois sur le même axe, une pluralité d'axes de satellite (6) sur lesquels plusieurs satellites (7) sont supportés de manière rotative par le biais de paliers à roulement radiaux (11, 12) insérés dans des alésages de satellites centraux (8) et lubrifiés de manière permanente par le biais de conduites d'alimentation en lubrifiant axiales et radiales (9, 10) à l'intérieur des axes de satellites (6), des paliers à aiguilles axiaux (25, 26) étant à chaque fois disposés entre les parois latérales (2, 3) du porte-satellites (1) et les côtés axiaux (13, 14) des satellites (7), lesquels paliers à aiguilles axiaux présentent une couronne d'aiguilles axiale (23, 24) formée par une pluralité d'aiguilles de palier (19, 20) et une cage d'aiguilles axiale (21, 22), et sont réalisés en tant que protection contre l'usure du porte-satellites (1) et des satellites (7) et en tant que butée axiale pour les paliers à roulements radiaux (11, 12) des satellites (7), **caractérisé en ce que** les paliers à aiguilles axiaux (25, 26) présentent seulement chacun une rondelle coudée axialement (17, 18) avec une section transversale profilée en forme de S qui se compose radialement à chaque fois d'une branche horizontale extérieure (27, 28), d'une branche verticale supérieure (29, 30), d'une branche horizontale centrale (31, 32), d'une branche verticale inférieure (33, 34) et d'une branche horizontale intérieure (35, 36), chaque palier à aiguilles axial (25, 26) présentant une largeur axiale (B_{A}) formée du diamètre des aiguilles de palier (19, 20) et de l'épaisseur de matériau de la rondelle coudée axialement (17, 18), qui est supérieure ou égale à 0,8 mm, et pouvant être remplacé par toute rondelle de butée antérieure insérée au même endroit, avec une largeur axiale supérieure ou égale à 0,8 mm sans modifier le reste de la construction.

2. Palier de satellite selon la revendication 1, **caractérisé en ce que** le diamètre extérieur (D_{A}) de la branche horizontale centrale (31, 32) des rondelles coudées axialement (17, 18) est supérieur au diamètre (Dp) des alésages de satellite (8) de telle sorte qu'il se forme entre les branches verticales inférieures (33, 34) des rondelles coudées axialement (17, 18) et les côtés axiaux (13, 14) des satellites (7), deux joints d'étanchéité à fente (49, 50) pour un écoulement de lubrifiant étranglé hors des paliers à roulements radiaux (11, 12) des satellites (7).

3. Palier de satellite selon la revendication 1, **caractérisé en ce que** le diamètre extérieur (D_{A}) des branches horizontales centrales (31, 32) des rondelles coudées axialement (17, 18) est inférieur au diamètre (D_{P}) des alésages de satellite (8) de telle sorte qu'il se forme entre les branches horizontales centrales (31, 32) des rondelles coudées axialement (17, 18) et les alésages de satellite (8) deux plus grandes fentes annulaires (51, 52) pour un écoulement de lubrifiant de grand volume hors des paliers à roulements radiaux (11, 12) des satellites (7).

4. Palier de satellite selon la revendication 1, **caractérisé en ce que** le diamètre extérieur (D_{A}) des branches horizontales centrales (31, 32) des rondelles coudées axialement (17, 18) est inférieur au diamètre (D_{P}) des alésages de satellite (8) et en même temps les branches horizontales centrales (31, 32) et les branches horizontales intérieures (35, 36) sont réalisées de manière prolongée axialement, de telle sorte que celles-ci et les branches verticales inférieures (33, 34) pénètrent à l'intérieur des alésages de satellite (8) et les satellites (7), conjointement avec les paliers à aiguilles axiaux (25, 26) et les paliers à roulements radiaux (11, 12) forment une unité structurelle pouvant être montée plus facilement dans le porte-satellites (1) .

5. Palier de satellite selon l'une quelconque des revendications 1 à 4, **caractérisé en ce que** les branches horizontales extérieures (27, 28), les branches verticales supérieures (29, 30) et les branches horizontales centrales (31, 32) des rondelles coudées axialement (17, 18) sont prévues pour recevoir les couronnes à aiguilles axiales (23, 24), les côtés intérieurs (37, 38) des branches verticales supérieures (29, 30) formant les chemins de roulement pour les aiguilles de palier (19, 20).

6. Palier de satellite selon l'une quelconque des revendications 1 à 4, **caractérisé en ce que** les côtés extérieurs (39, 40) des branches verticales supérieures (29, 30) des rondelles coudées axialement (17, 18) s'appliquent contre les parois latérales (2, 3) du porte-satellites (1) et les côtés intérieurs (41, 42) des branches verticales inférieures (33, 34) des rondelles coudées axialement (17, 18) sont réalisés sous forme de butée axiale pour les paliers à roulements radiaux (11, 12) des satellites (7).

7. Palier de satellite selon la revendication 7, **caractérisé en ce que** les paliers à roulements radiaux (11, 12) pour chaque satellite (7) sont réalisés de préférence sous la forme de deux couronnes d'aiguilles radiales (47, 48) disposées l'une à côté de l'autre, constituées à chaque fois d'une cage (43, 44) et d'une pluralité d'aiguilles de palier (45, 46), qui sont en contact de butée avec leurs cages (43, 44) avec les branches verticales inférieures (33, 34) des rondelles coudées axialement (17, 18).
